Europäisches Patentamt

European Patent Office

Office européen des brevets

(11) Publication number: **0 377 289**

**A2**

# (12) EUROPEAN PATENT APPLICATION

(21) Application number: **89312943.7**

(22) Date of filing: **12.12.89**

(51) Int. Cl.5: **G09F 3/02, B31D 1/02, C08L 23/10**

(30) Priority: **05.01.89 US 292087**

(43) Date of publication of application:
**11.07.90 Bulletin 90/28**

(84) Designated Contracting States:
**DE ES FR GB IT NL SE**

(71) Applicant: **MINNESOTA MINING AND MANUFACTURING COMPANY**
**3M Center, P.O. Box 33427**
**Saint Paul, MN 55133- 3427(US)**

(72) Inventor: **Morin, George E. c/o Minnesota Mining and**
**Manufacturing Company 2501 Hudson Road**
**P.O. Box 33427 St. Paul Minnesota 55133(US)**

(74) Representative: **Baillie, Iain Cameron et al**
**c/o Ladas & Parry Isartorplatz 5**
**D-8000 München 2(DE)**

(54) **Control-depth die-cuttable pressure-sensitive labels.**

(57) A cast extruded film suitable for controlled-depth die-cuttable label face-stock comprising:

a) from about 70 parts to about 30 parts of a polypropylene homopolymer or a blend of polypropylene and at least one other olefinic polymer, and

b) correspondingly, from about 30 parts to 70 parts of an inorganic filler, wherein said polypropylene film is controlled depth die-cuttable with a bearer force of not more than about 120 kilograms, and has tensile and elongation at break values of not more than 20,000 kilopascals and 750% respectively.

Fig. 3

## CONTROL-DEPTH DIE-CUTTABLE PRESSURE-SENSITIVE LABELS

### Background of the Invention

Pressure-sensitive adhesive labels are well known in the art. Such labels typically consist of a surface layer of material, called facestock, backed by a layer of pressure-sensitive adhesive covered by a release liner or carrier web. The liner or web serves two purposes. It protects the adhesive during shipment and storage, and also allows for efficient handling and dispensing of individual labels.

Although labels may be supplied as discrete items, high-speed production lines are typically designed to use large rolls of liner carrying individually die-cut labels. When such rolls of labels are desired, the liner must remain uncut, and the process by which the labels are cut without disturbing the liner is referred to as "controlled depth die-cutting".

The labels may then be dispensed in either of two ways. In one method, the liner is bent by drawing across an edge under tension, which releases a portion of the label from the liner (the label is generally less flexible than the liner). The separated portion is then contacted directly with a substrate, or manually transferred from the liner. The second method involves simply manually peeling an individual label from the liner and applying it to a substrate.

The ability of a label to be processed by controlled depth die-cutting is dependent on the type and thickness of the material from which the facestock is formed as well as the integrity of the liner.

Many label applications further require that the facestock be of a polymeric film material in order to provide a product having properties such as weatherability, strength, water resistance, abrasion-resistance, and gloss.

As stated, the integrity of the liner is also important for these operations. Typically, the release liner for controlled depth die-cutting is silicone coated and may be a paper, e.g., semi-bleached, supercalendered, (18 to 27 kilograms per 280 kilograms basis) papers. Films such as biaxially oriented polyester, uniaxially and biaxially oriented polypropylene, and polymer coated papers may also be used.

U. S. Pat. 4,447,479 (Harrison), issued May 8, 1984, discloses a "cardboard like" plastic sheet material from 0.1-1.2 mm in thickness, comprising 5-70 parts of inorganic particulate material and, correspondingly, 95-30 parts of a polyolefin resin selected from polypropylene, propylene-ethylene sequential copolymers, propylene-ethylene random copolymers, high density polyethylenes and mixtures thereof. A propylene-ethylene sequential copolymer is defined as a type of copolymer which is made by first polymerizing propylene, and then, prior to the completion of the polymerization reaction, injecting ethylene into the polymerization zone so that as the polymerization proceeds, polymer chains are produced which become increasingly rich in ethylene, randomly distributed (see column 2, lines 31-52) and copolymerized. The compounding is carried out to generate a mass having a melt flow index of between 0.55 and 2.2 g/10 minutes at 230° C under a load of 2.16 kg. The material is subsequently converted into a sheet by standard processing methods. This "card-board like" material is inherently inflexible and therefore not suitable for label face-stock.

Polypropylene homopolymer is disclosed to be usable in the flexible sheeting of Harrison only when blended with a rubber compound. Various suitable inorganic particulate materials are disclosed as useful, including talc, calcium carbonate, dolomite, kaolin and gypsum, with talc and calcium carbonate being the preferred inorganics.

PCT International Publication WO 86/04547, published August 14, 1986 (Freedman), discloses film-forming means which are coextruded to form all-plastic multilayer liners and facestocks for pressure-sensitive labels, decals and other products formed from sheet and roll stock. A filler in the charges for the liner coextrusion differentially affects the roughness of the liner forms. Mica is disclosed to be the preferred filler, and comprises from about 10% to about 40% of the core layer.

U.S. Pat. No. 4,587,158 (Ewing) issued May 6, 1986 discloses a deformable label system composed of low or medium density polyethylene film which is corona treated to accept print. While the possible film thickness is disclosed to be 12.5 micrometers (0.5 mil) to 125 micrometers (5 mils), it is conceded that not all combinations of thickness and polyethylene are useful (see column 6, lines 6, 44). The density of the polyethylene must be "matched" with the thickness of the film to be useful as claimed in Ewing. Thus a film with low density polyethylene, e.g., 0.91 g/cc may not be useful in films which are less than 50 micrometers (2 mils) thick or over 125 micrometers (5 mils) thick.

Likewise, a film of medium density polyethylene may be useful only at thicknesses of between 12.5 micrometers (0.5 mil) and 75 micrometers (3 mils). The preferred range of utility is the use of polyethylene having densities of between 0.915 g/cc and 0.935 g/cc in films of from about 50 micrometers (2 mils) to 75 micrometers (3 mils). High density polyethylene films are not deemed to be useful in the deformable label system.

U.S. Pat. No. 4,273,816 (Tollette) issued June 6, 1981 discloses a multi-layer flexible label system having an outer layer of either polyethylene, polypropylene or polyester and an inner layer of polyethylene foam.

U.S. Pat. No. 4,060,168 (Romagnoli), issued on November 29, 1977, discloses a label assembly including strip of backing material with a series of printed labels. The backing material includes a die-cut portion opposed to the label which remains adhered to the label upon application of the label to a container.

U.S. Pat. No. 4,582,736 (Duncan) issued April 15, 1986 discloses a pressure-sensitive adhesive label stock material. The facing layer of the material comprises a laminate of (1) a thermoplastic polymer matrix substrate layer incorporating a strata of voids, and (2) a void-free skin layer substantially concealing the surface irregularities of the substrate layer. A substantial number of the voids in the substrate layer are stated to have positioned therein at least one spherical void-initiating particle which is phase distinct and incompatible with the matrix material. The particle may be organic or inorganic in nature, and preferably is from about 0.1 to about 10 in size, and may be present in up to about 20% of the substrate layer. Opacifying pigments such as titanium dioxide and zinc oxide may also be present in amounts of from 1 to 3% by weight.

U. K. Patent 1,044,028, published September 28, 1966 discloses filled polyolefin compositions comprising 5% to 90% of a high molecular weight polyolefin, particularly polyethylene, from 5% to 90% of inert filler material and 5% to 90% of plasticizer. The polyolefin must have a molecular weight sufficiently high to give it a standard load melt index of substantially zero. Polyethylenes of the high density type (0.93 to 0.97) are preferred; however, other high molecular weight polyolefins are mentioned in passing, including low density polyethylenes, polypropylene, and copolymers of ethylene and butylene. Fillers described as useful include carbon blacks, metal oxides and hydroxides, silica and hydrated silicas, especially aluminum oxide and hydroxide, metal carbonates and metal silicates and aluminates, naturally occurring clays and mica, precipitated silicates, synthetic zeolites, inorganic salts, acetates, sulfates, phosphates, nitrates and sugar.

The compositions are disclosed to be useful for applications including molding resins, liners for roofing, lubricating bearings, and porous films and molded items (when some or all the plasticizer and filler have been extracted with an organic solvent or water). Use of the compositions as labels, or the like are not disclosed.

The use of polypropylene film as a facestock for pressure-sensitive labels has been generally limited to biaxially oriented polypropylene (BOPP) films. These films are usually transparent, and, if colored, have a low degree of opacity unless vacuum metallized. Up to now, the pressure-sensitive BOPP film label stocks have not enjoyed a large market share despite the low cost potential of polypropylene film labels.

Unoriented polypropylene films, which also offer significant cost and feature advantages, have rarely been used in pressure-sensitive label stocks destined for the high volume label business. The unoriented film is usually tough, and has an unusual type of extensibility which results in poor characteristics for control depth die-cutting. This is a severe limitation since a very high percentage of the pressure-sensitive labels are produced using the required controlled depth die-cutting process. It is this process that produces the die-cut labels on a continuous liner for efficient, automatic, high speed dispensing of pressure-sensitive labels in modern manufacturing plants.

There remains a need for a low cost polypropylene film facestock for the label business without the above mentioned disadvantages.

Surprisingly, Applicant has now discovered that a cast-extruded, highly filled film comprising a polypropylene homopolymer or a blend of polypropylene and other olefinic polymer can be used as a facestock in controlled depth die-cuttable label stock with a low bearer force of about 120 kilograms.

## Summary of the Invention

The present invention provides a cast extruded film suitable for controlled-depth die-cuttable label facestock comprising:

a) from about 70 parts to about 30 parts of a polypropylene homopolymer or a blend of polypropylene and at least one other olefinic polymer, and

b) correspondingly, from about 30 parts to 70 parts of an inorganic filler, whereby said polypropylene film is controlled depth die-cuttable with bearer force of not more than about 120 kilograms, has a tensile and elongation at break of not more than 20,000 kilopascals and 750% respectively.

The polypropylene homopolymer preferably has a melt index of from about 1 gram per 10 minutes to about 1500 grams per 10 minutes, preferably from about 2 grams per 10 minutes to about 50 grams per 10 minutes, when tested according to the American Society of Test Methods ASTM-D-1238, Condition L.

The film label face-stock preferably has a thickness of about 25 micrometers to about 250 micrometers, more preferably of about 50 micrometers to about 125 micrometers.

The present invention further comprises a controlled depth die-cuttable pressure-sensitive adhesive label stock comprising a filled polypropylene facestock, and a pressure-sensitive adhesive carried on a release liner.

The polypropylene film described above is also useful as a facestock in full-depth die-cuttable pressure-sensitive adhesive label stock and as a dimensionally stable, full and controlled depth die-cuttable release liner when coated with a release agent such as silicone.

The film may have a high gloss surface or can be produced with varying degrees of matte or textured surface finishes.

Brief Description of the Drawings

The invention may be more clearly understood by reference to the drawings, wherein:

Figure 1 is a top elevation view of a control-depth die-cutting station.

Figure 2 is a side elevation view of the control depth die-cutting station, complete with a roll of film stock in the process of die-cutting.

Figures 3 and 4 are cross-sectional views of the die-cutting process. Figure 3 shows ideal die-cutting conditions; Figure 4 shows undesirable conditions.

Detailed Description of the Invention

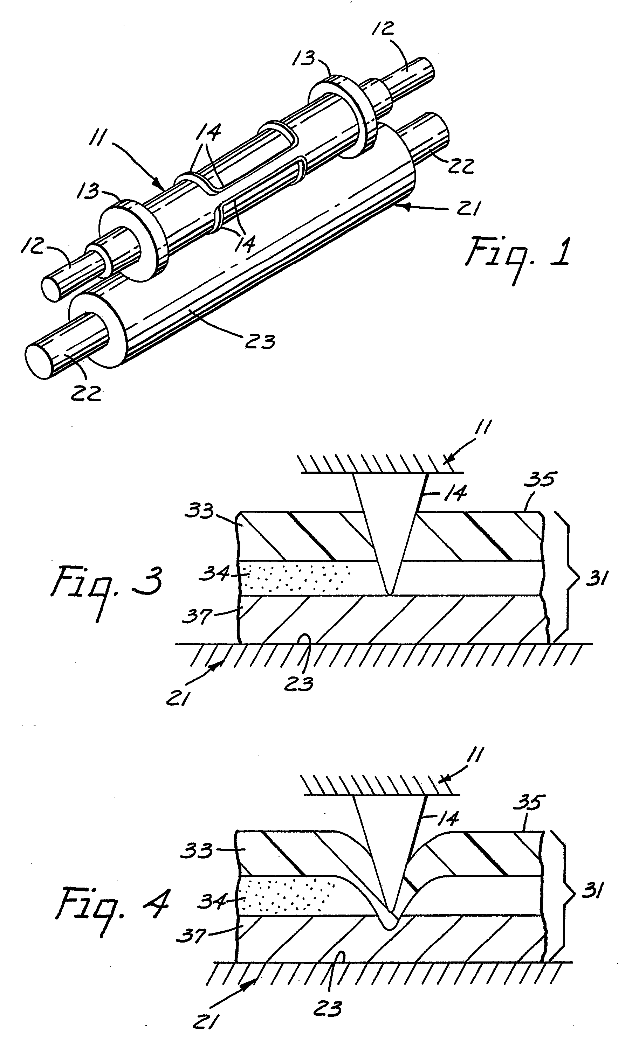

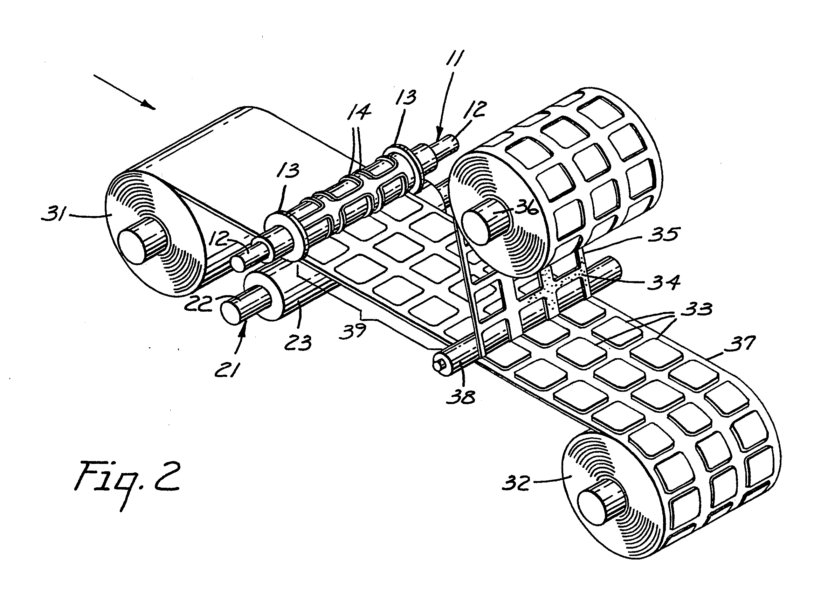

As shown in Fig. 1, a die roll (11) and an anvil roll (21) are positioned as normally used in a control-depth die-cutting station. Each of these rolls is driven at a speed consistent with the lineal web speed of the pressure-sensitive label stock via gears attached to the shafts (12) and (22) of the rolls. The anvil roll shafts (22) are fitted into lubricated bearings which are firmly attached to the framework of the die-cutting station. The die roll shafts (12) are fitted into lubricated bearings which essentially float so that the forces between the die roll bearers (13) and the anvil roll face (23) can be controlled and optimized. The die roll bearers (13) contact the anvil roll face (23) to maintain a fixed distance between the die roll cutting edges (14) and the anvil roll face (23). This fixed distance is usually equal to the thickness of the release liner (37) used in the pressure-sensitive label stock being die-cut.

A definite pressure is required to perform the cutting/crushing action of the die roll cutting edges (14). therefore, forces must be used to press the die roll bearers (13) into complete contact with the anvil roll face (23). These forces are generally applied to the bearers (13) using screw pressure to force a set of double rollers against each bearer (13). The bearer forces listed in this patent were measured using load cells placed between each pressure inducing screw and each set of double rollers.

Fig. 2 depicts a simplified sketch of the die-cutting process. The die roll (11), anvil roll (21) and the die roll cutting edges (14) are positioned as shown in Figure 1. The roll of pressure-sensitive label stock (31) is control depth die-cut as it passes between the die roll (11) and the anvil roll (21). The die-cut labels (33) and the waste matrix (35) remain on the release liner (37) forming a die-cut composite (39) until the waste matrix (35) is removed. One method of removing the waste matrix (35) is to establish a separation using a small diameter waste stripping roll (38). The waste matrix (35) is wound onto the waste matrix wind-up roll (36) and the die-cut labels (33) remain on the release liner (37) and proceed to the label wind-up roll (32).

Figure 3 depicts a cross-section of materials depicting ideal controlled depth die-cutting conditions. The pressure-sensitive label stock (31) is shown contacting the anvil roll face (23). The die roll cutting edge (14) is shown penetrating completely the facestock (33) and the adhesive (34) leaving the release liner (37) undisturbed.

Figure 4 depicts a cross-section of materials depicting unsatisfactory controlled depth die-cutting conditions. The pressure-sensitive label stock (31) is shown contacting the anvil roll face (23) as in Figure 3. However, the die roll cutting edge (14) has elongated the facestock which becomes an extension of the die roll cutting edge and deforms the release liner (37). In the case of Figure 4, there are no die-cut labels produced. However, in borderline process conditions using paper release liners, the liner deformity, which is mostly crushed or cut paper fibers, causes the release liner to tear under conditions of printing, die-cutting and dispensing of the labels.

The polypropylene facestock useful in labels of this invention is an unoriented, cast-extruded film. The film may comprise 100% of a polypropylene homopolymer or blends of polypropylene homopolymers, or may comprise up to about 50%, preferably from about 10% to about 25%, of another olefinic homopolymer or copolymer.

Useful olefinic homopolymers include polyethylenes, e.g., Chemplex™ 3404 available from Chemplex Corporation. Useful olefinic copolymers include poly(propylene-ethylene) copolymers available as Dypro™ 9670 (2.8 to 3.2% of polyethylene), Dypro™ W-756 (3.3 to 3.8% polyethylene), and Dypro™ 7771 from Fina Oil and Chemical Company, and polyethylene/vinylacetate copolymers available as Norchem™ PE - 3010 (containing 9% vinylacetate) from Quatum Chemical, and Elvax 40W™ (containing 40% vinylacetate) from E.I. DuPont de Nemours (DuPont). Use of these additional polymers may effect the ease of die-cuttability and the flexibility of the labels.

Polypropylene homopolymers useful for this invention have melt indices ranging from about 1 to 1500 grams per 10 minutes (as measured by ASTM-D-1238 Condition L), preferably from about 2 to 50 grams per 10 minutes. Homopolymers having melt indices outside this preferred range are preferably present in blends with homopolymers having preferred melt indices.

In these blends, the homopolymers having higher melt indices have a positive effect on the die-cuttability of the pressure-sensitive adhesive label facestock.

The label facestock further comprises from about 30 parts to about 70 parts by weight of an inorganic filler. Some inorganic fillers useful in label facestocks include metal oxides or hydroxides, silicas, barytes, metal silicates and carbonates, natural or synthetic zeolites and natural or calcined clays. Preferred inorganic fillers include calcium carbonate, mica, talc, bentonite, magnesium silicon dioxide, silicates, montmorillonite and barium sulfate with calcium carbonate being the most preferred. When it is desirable to use only a single filler, calcium carbonate is highly preferred.

Where mixtures of inorganic fillers are desirably, e.g., for cost considerations, other fillers are also useful. For example, calcium carbonate, present as a main filler, can be combined with Montana talc (a mixture of mainly silicone dioxide and magnesium oxide available from Pfizer Minerals, Pigments and Metals Division) as a secondary filler. Other useful secondary fillers include clay such as Polyfil™ WC, a white anhydrous clay filler from J. M. Huber Corporation; Bartex™ 65, barium sulfate from Hitox Corporation of America; Zinc oxide XX-78 from Zinc Corporation of America; and Ceralox™ alumina from Ceralox Corporation.

The preferred inorganic fillers have particle size distribution ranging from about 0.4 micrometer to about 50 micrometers, preferably from about 0.4 micrometer to about 14 micrometers.

Thickness of the filled polypropylene film facestock is from about 25 micrometers to about 250 micrometers depending on the application, preferably from about 50 micrometers to about 125 micrometers.

For good controlled-depth die-cuttability, the film label facestock preferably exhibits tensile at break of not more than about 20,000 kiloPascals, more preferably not more than about 18,000 kiloPascals, and elongation at break of preferably not more than about 750%.

The label facestock may also contain pigments to achieve desired degree of opacity and/or color and may typically contain from about 4 to about 20 parts by weight. Where translucent label facestocks are desired, a lower amount of pigment is used. Useful pigments include titanium dioxide, and phthalocyanine green 7.

The label facestock may also contain additives such as processing aids, ultra-violet stabilizers, and antioxidants.

The label facestocks are typically printed. The printing may be done by the conventional methods, including flexographic printing, screen process, letter press or gravure printing methods. The addition of a topcoat has been used to enhance the printability of prior art facestocks. Useful top coats may be comprised of a resin such as polyethylmethacrylate, e.g., Elvacite™ 2043, available from DuPont. The label stocks are generally coated with this ink receptive layer after corona treatment and just prior to printing.

The printability or ink receptivity of label stocks is measured by testing for ink lay down and anchorage. The label facestock of the present invention exhibits surprisingly improved ink receptivity, both in ink lay down and anchorage, without further topcoat when used with a variety of commercially available inks.

The labels are at least partially coated with a pressure-sensitive adhesive. Useful pressure-sensitive adhesives include solvent-coatable, hot-melt-coatable, radiation-curable (E-beam or UV curable) and water-

5

based emulsion type adhesives that are well-known in the art. Specific examples of preferred types of adhesives include acrylic-based adhesives, e.g., isooctyl acrylate/acrylic acid copolymers and tackified acrylate copolymers; tackified rubber-based adhesives, e.g., tackified styrene-isoprene-styrene block copolymers; tackified styrene-butadiene-styrene block copolymers; nitrile rubbers, e.g., acrylonitrile-butadiene; silicone-based adhesive, e.g., polysiloxanes; and polyurethanes. As discussed above, pressure-sensitive label stocks are commonly converted into individual pressure-sensitive labels using a controlled depth die-cutting process. Several varieties of dies are useful in this process. One common type is the rotary die, which is used in conjunction with an anvil roll as illustrated in Fig. 1. The cutting (or crushing) edge of the die, (14), penetrates through the facestock, (31), and the adhesive, (34), as showed in Fig. 3, during operation; for an optimum die-cutting process, the release liner (37) is not penetrated or disturbed.

There are practical process limitations when using the typical controlled depth rotary die. One important condition is the amount of force applied to each of the bearers (13), as shown in Fig. 1. The desirable force to the bearers will vary according to such factors as die size, die design and the material being processed. A total force of not more than about 120 kilograms, preferably not more than about 90 kilograms is recommended for the die described in preceding paragraphs. Higher bearer forces may result in premature damage to the die-cutting equipment, and poor control of label quality.

The die-cuttability is characterized by the Dye Penetration Test, described infra, which indicates the condition of the liner. Liner damage is due to penetration of the cutting edges of the die, and occasionally, the facestock and adhesive into the liner after die-cutting, the amount of damage being dependent on the degree of penetration. After die-cutting the liner may be classified as follows:

Good - no obvious liner damage

Satisfactory - very limited liner damage

Unsatisfactory - liner surface crushed or cut

It is important that polymeric film facestocks have the necessary physical characteristics to work well on the various types of commonly used release liners. These include silicone-coated supercalendered papers, such as those commercially available from James River Corporation and Nicolet Paper Company, polymeric film-coated paper liners, as well as "state of the art" silicone-coated film release liners, including polyester films such as Mylar™ sold by Dupont.

When coated with a release agent, the filled polypropylene film is useful as a release liner. The release liner is dimensionally stable in varying humidity conditions and is useful when a controlled depth die-cuttable liner is desirable. It would also be useful as a release liner for labels where it is desirable to have the die-cut through both the label and the liner, resulting in handleable discrete items. Where it is preferable to have many labels connected to a single liner sheet, i.e. for winding onto a roll, the filled polypropylene film release liner would not be suitable.

All percents, parts and ratios described herein are by weight unless otherwise specifically stated.

The following tests are used to evaluate labels of the invention.

### Controlled-depth Die-Cuttability

A roll of film was corona treated and coated with an ink receptive top-coating. A silicone release coated, 62.5 micrometers thick, 20 kilograms per 280 square meters basis weight, super-calendered paper from James River Corporation was then adhesive coated on the silicone side. The wet adhesive was dried in a tunnel drier and laminated to the non-topcoated side of the filled polypropylene film.

The resulting pressure-sensitive label stock was slit to a four inch width and wound into a finished rolls ready for die-cuttability evaluations on a Mark Andy Model 830 multipurpose printer/die-cutter. The controlled depth die-cutting was performed using a rotary die made by Rotometrics Group, Rotodie Division. The die configuration was a round-cornered rectangle, 2.85 centimeters(cm) by 5.87 cm, with three cavities across and three cavities around for a total of 9 cavities. An RC-300 monitor, sold by RollCut Corporation, was used to measure the force applied to each die bearer. The RC-300 monitor has precision load cells which sensed the forces used in determining the die-cutting performance of pressure-sensitive label stocks. A calibrated digital read-out then converted the load cell output voltage to kilograms of measured force. The forces on the die bearers were first set at a total force of 4.5 kilograms.

Using a control set of pressure-sensitive label stocks with either 33 kilogram Kromekote™ paper (on a 280 sq. meters basis), from Champion Paper or a 87.5 micrometer plasticized vinyl film facestock, the bearer forces were increased until 100% of the labels remained on the liner was achieved. Then the test labels were run in the same way and the die-cutting performance was recorded as total die bearer force, percent labels remaining on the liner, and condition of the liner.

## Dye Penetration Test

This procedure was used to determine the ease of controlled depth die-cutting and the associated condition of the liner after die-cutting. A 1% solution of methyl red dye in ethyl alcohol was placed on a gauze wiper. The die-cut labels were removed from a portion of the liner. The gauze with the red dye solution was rubbed onto the silicone side of the release liner where the labels were removed. The object was to determine if the cutting edges of the die had penetrated the silicone release layer and/or the paper.

Penetration into a silicone valley could be noted at the die contact site by a red line which was easily wiped off the surface. Penetration of the die into the paper would be noted by the wicking of the red solution into the paper.

Definitions for liner condition (after die-cutting) used in this document were as follows.

A = Good, no obvious liner damage.

B = Satisfactory, very limited liner damage.

C = Unsatisfactory, liner surface crushed or cut.

## Tensile Elongation at Break

The tensile and elongation data were measured at the film breaking point according to A.S.T.M. standard test method D 882-83 method A except for grip separation speed as noted below. This test employed a constant rate of separation of the grips which held the ends of the test specimen. The test samples were cut to a size of 2.54 cm width by 10.2 cm length in the designated direction (machine or transverse). The test equipment was an Instron™ brand model 1122, available from the Instron Corporation. The initial grip separation was 5.1 cm. The rate of grip separation was 12.7 cm per minute. The tensile data was recorded in kiloPascals and was obtained by dividing the maximum load by the original cross sectional area of the specimen. The percent elongation data was obtained by dividing the elongation at the break point by the initial grip separation and multiplying by 100.

## Printability Test

The label facestock of the present invention was evaluated for printability using two different printing techniques, i.e., flexographic and letterpress. Two different inks were employed: Gemglo #8 Red Code B-876854-76L0098 (a flexographic ink with an alcohol solvent system) and UV vinyl process Red Code B-878368-86LO566 (an UV curable letterpress ink), both available from Inmont Division of BASF.

The flexographic ink was applied using a spring loaded, adjustable, flexo hand proofer with a 180 p Evenflo™ Anilox engraved roll available from Pamarco Inc. The ink sample was allowed to air dry at 22.2° C (72° F) for ten minutes.

The letterpress ink was applied using a "quickpeek" color proofing kit sold by Thwing-Albert Instrument Company. The ultraviolet radiation source was a 152 millimeter (six inch) long, 200 watt per 25.4 millimeters (one inch), medium pressure, mercury vapor, ultraviolet curing lamp with a fused quartz envelope. The ink sample was exposed to the ultraviolet radiation on a stainless steel wire conveyer belt, traveling at 10.5 meters (35 feet) per minute, at a distance of 63 millimeters (2 1/2 inches) under the lamp.

Ink anchorage was evaluated by applying Scotch™ brand #898 filament tape to the inked film using a smaller roller (with handle) and firm hand pressure. The filament tape adheres immediately to the inked film. The dwell time of the tape was approximately one minute. One piece of the filament tape was pulled back at a 180° angle at 305 millimeters (12 inches per minute). A second piece of the filament tape was pulled back at a 180° angle at 7,625 millimeters (300 inches) per minute. Ink anchorage characteristics were reported as a percentage of ink transferring to the filament tape. The data was expressed as the average of the percent ink offset at the slow and the fast filament tape pull speeds.

The ink anchorage test conducted with the flexographic ink was repeated three times as follows: ten minutes, one hour, and 24 hours after ink application.

The ink anchorage test conducted with the letterpress ink was repeated three times as follows: one minute, one hour and 24 hours after exposure to the ultraviolet radiation source.

Interpretations for ink anchorage are shown as follows:

First ink dwell period -

ten minutes for flexographic, and

one minute for letterpress methods.

≤ 12 percent ink offset: satisfactory

> 12 percent ink offset: generally unsatisfactory.

Second ink dwell period -

one hour

≤ 3 percent ink offset: satisfactory

> 3 percent ink offset: generally unsatisfactory

Third ink dwell period -

24 hours

Any offset: generally unsatisfactory

## EXAMPLE 1

A controlled depth die-cuttable highly filled polypropylene film was made by compounding 45 parts of polypropylene pellets having a melt index of 9 (commercially available as Dypro 8771 from Fina Oil and Chemical Company), 45 parts of calcium carbonate (available commercially as OMYA FT from OMYA Inc.), with a particle size distribution between 0.4 microns and 8 microns and 10 parts of titanium dioxide, commercially available as Pure R-101 from DuPont, in a 40 millimeter diameter model ZE40 x 33D Berstorff co-rotating twin screw extruder (commercially available from Berstorff Corporation), fitted with an extruder screw containing a vent section and several mixing heads. The extruder barrel was operated at about 185°C, and the output from this extruder was fed to a conventional stranding die, also made by the Berstorff Corporation, operating at a temperature between 204°C and 232°C. The compounded plastic strands were then cooled in a water bath, dried and cut into short highly filled polypropylene pellets.

These highly filled pellets were then fed to the throat of a 62.5 mm diameter single screw Egan extruder (commercially available from Egan Machinery Company), operating at a temperature of from about 204°C to about 288°C, and to a flat die with a die lip opening of 0.025 cm, operating within the same temperature range, at an output rate of 55 kilograms per hour. The thick hot film was then pulled into a set of surfacing and quenching rolls with the speed of the first nip adjusted to draw the film down to a nominal thickness of 88 micrometers. The nip was comprised of a polymeric covered steel roll at about 10°C and a chrome plated steel roll at 38°C. The film was then corona treated on both sides.

## EXAMPLE 2

A controlled depth die-cuttable pressure-sensitive adhesive label stock was made from the highly filled polypropylene film of example 1, a silicone coated release liner, an acrylic adhesive and an acrylic based ink receptive coating. The release liner was first coated on its silicone release side with a solvent-based acrylic adhesive containing 95% isooctyl acrylate and 5% acrylic acid, to a dried coating thickness of 15 micrometers using a reverse roll coater followed by solvent drying in a counter-current airflow oven.

One side of the polypropylene film of example 1 was then laminated to the adhesive side of this adhesive coated release liner by a lamination process known sometimes as transfer coating.

The other side of the polypropylene film was then coated with an acrylic based ink receptive top coating comprised of 4% Elvacite™ 2043 and 96% toluene.

This pressure-sensitive label stock was die-cut using a commercially available rotary die made by Rotometrics Group-Rotodie Division on a Mark Andy™ Model 830 printing press, to round cornered, rectangular labels with dimensions of 2.86 cm by 5.87 cm. All labels cut cleanly and easily and remained in place on the silicone coated paper release liner. The die bearer force loading was about 41 kilograms per bearer which easily eliminated all evidence of die bounce. No dye penetration on the liner was found with the penetration test, showing good controlled depth die-cuttability. The test results are shown in Table 1. A printability test was also conducted, and the results are shown in Table 2.

## EXAMPLE 3

A controlled depth die-cuttable filled polypropylene film was made similar to Example 1, except the Berstorff ZE-40 x 33 D twin screw extruder was equipped with a flat film extrusion die instead of the stranding die to produce thick hot melt that was then pulled into a set of surfacing and quenching rolls with the speed of the first nip rolls adjusted to draw the film to a nominal thickness of 88 micrometers.

The nip rolls comprised of a polymer covered steel roll operated at $10^\circ$ C and a chrome plated steel roll operated at $38^\circ$ C. Additional quench rolls were set at $49^\circ$ C. The film was corona treated on both sides and wound into a roll prior to adhesive coating.

## EXAMPLES 4-9 AND 10C - 17C

The label facestocks used in these examples were made in the same way as in Example 1, except that different amounts of polypropylene, calcium carbonate and titanium dioxide were used. These variations are listed in Table 1. These facestocks were coated according to Example 2 using the same adhesive and release coating. They were then tested for die-cuttability, dye penetration, tensile and elongation and the results are also shown in Table 1.

## EXAMPLES 18-19

The film of Examples 1 and 9 were corona treated using corona treating power range of about $2 \times 10^{-4}$ joules per square meter (4 watts per square foot per minute) Gemglo flexographic ink and UV vinyl process ink were then printed on the films using their respective printing techniques and the results are shown in Table 2.

## EXAMPLES 20-28

These were made similar to Example 1 except different amounts of $TiO_2$, and $CaCO_3$ and polypropylene were used. These variations are listed in Table 3. These facestocks were coated according to Example 2 using the same adhesive and release coating. They were then tested as in previous examples and the results are shown in Table 3.

## EXAMPLES 29-30 and 29C

These were made similar to Example 1 and Example 2 except constant amounts of $CaCO_3$, without titanium dioxide, and blends of polypropylene homopolymer and polypropylene/polyethylene copolymer were used. These are shown in Table 4 along with die-cuttability test results and condition of liner after die-cutting. A control using 100% polypropylene homopolymer was also made and tested and results are also shown.

## EXAMPLES 31-33 and 31C

These were made similar to Example 1 and Example 2 except with constant amounts of $CaCO_3$, without titanium dioxide, and blends of polypropylene homopolymer and polyethylene/vinyl acetate copolymers were used. These are shown in Table 5 along with test results.

EXAMPLE 34

This was made similar to Example 1 and 2 except with a blend of polypropylene homopolymer and polyethylene homopolymer. This is shown in Table 6 along with test results.

EXAMPLES 35-39 and 35C

Examples 35-39 were made similar to Examples 1 and 2 except polypropylene homopolymer and copolymer of different melt indices were blended with polypropylene of melt index 9 to obtain a blend of varying melt indices. These are shown in Table 7 along with the control 35C.

EXAMPLES 40-47

These were made similar to Example 1 and the compositions and the die-cutting results were recorded in Table 8.

EXAMPLES 48-52

These were made similar to Examples 1 and 2 except polypropylene homopolymer of melt index 9 was blended at varying amounts with polypropylene homopolymer of melt index 2.0. The test results along with composition variations are shown in Table 9.

EXAMPLES 53C-59C, and 60-64

These were made similar to Examples 1 and 2 except with varying amounts of $CaCO_3$ and talc. These are shown in Table 10 and Table 10A along with test data. The samples were then corona treated as described in Examples 18 and 19. Ink printability tests were performed for the labels of these examples, and the results are shown in Table 10 and Table 10A.

EXAMPLES 65C-68C and 69-71

These were made similar to Example 1 and 2 except with varying amounts of $CaCO_3$ and clay. These are shown in Table 11 along with test data.

EXAMPLES 71C-76C and 77-79

These were made similar to Examples 1 and 2 except with varying amounts of $CaCO_3$ and Mica. These are shown in Table 12 and Table 12A along with test data.

EXAMPLES 79C-92C and 93-95

These were made similar to Examples 1 and 2 except with varying amounts of $CaCO_3$ and soft silica. These are shown in Table 13 and Table 13A along with test data.

## EXAMPLES 96C-100C and 101

These were made similar to Examples 1 and 2 with varying amounts of CaCO₃ and Barium Sulfate. These are shown in Table 14 and Table 14A along with test data.

## EXAMPLES 102C-107C

These were made similar to Examples 1 and 2 except with varying amounts of $CaCO_3$ and Aluminum Silicate. These are shown in Table 15 along with test data.

## EXAMPLES 108C-114C

These were made similar to Examples 1 and 2 except with varying amounts of $CaCO_3$ and Degussa Silica. These are shown in Table 16 along with test data.

## EXAMPLES 115C-119C and 120

These were made similar to Examples 1 and 2 except with varying amounts of $CaCO_3$ and Alumina. These are shown in Table 17 along with test data.

## EXAMPLES 121C-125C and 126

These were made similar to Examples 1 and 2 except with varying amounts of $CaCO_3$ and Zinc oxide. These are shown in Table 18 along with test data.

## EXAMPLES 127-133

These were made similar to Examples 1 and 2 except with varying facestock thicknesses. These along with test results are shown in Table 19.

## EXAMPLE 134

This was made similar to Example 1. The film stock was then coated with Dow Corning System V solvent based silicone release coating and oven dried. This was then laminated to a polypropylene masking tape commercially available from Minnesota Mining and Manufacturing Company) and flat bed die-cut from the release liner side to obtain a score line cut. The release liner was easily removable, and exhibited even release characteristics.

TABLE 1

| Tensile elongation and die-cuttability properties of filled polypropylene film facestocks versus film composition. | | | | | | | | |
|---|---|---|---|---|---|---|---|---|
| Examples | %CaCo$_3$ | %PP | %TiO$_2$ | Bearer Force (Kg) | %Labels on liner | Liner cond. | Kilo Pascal Tensile at break | Elong. % |
| 2 | 45 | 45 | 10 | 82 | 100 | A | 15,400 | 670 |
| 4 | 56 | 36 | 8 | 64 | 100 | A | 13,400 | 670 |
| 5 | 51 | 41 | 8 | 77 | 100 | A | 14,400 | 680 |
| 6 | 48 | 43 | 8 | 82 | 100 | A | 16,000 | 680 |
| 7 | 46 | 46 | 8 | 86 | 100 | A | 16,350 | 680 |
| 8 | 43 | 49 | 8 | 86 | 100 | A/B | 17,250 | 690 |
| 9 | 41 | 51 | 8 | 113 | 100 | B | 17,850 | 700 |
| 10C | 36 | 56 | 8 | 227 | 97 | B/C | 19,300 | 700 |
| 11C | 31 | 61 | 8 | 227 | 95 | B/C | 21,050 | 700 |
| 12C | 26 | 66 | 8 | 227 | 85 | B/C | 22,400 | 700 |
| 13C | 21 | 71 | 8 | 227 | 84 | C | 23,750 | 700 |
| 14C | 16 | 76 | 8 | 227 | 74 | C | 25,600 | 730 |
| 15C | 11 | 82 | 8 | 227 | 72 | C | 27,050 | 750 |
| 16C | 6 | 86 | 8 | 227 | 55 | C | 28,550 | 850 |
| 17C | 0 | 92 | 8 | 227 | 47 | C | 31,005 | 1100 |

As can be seen from above, labels with filled polypropylene facestocks of the invention showed satisfactory to very good liner conditions after die-cutting, with 100% of the labels on the liner. The bearer force required to die-cut the labels ranged from 77 Kgs - 113 Kgs. Comparative labels showed unsatisfactory levels of liner damage, (less than 100% of the labels on the liner), and required much higher bearer forces (~227 + Kg).

TABLE 2

| Example | Ink | % Ink Offset | | | |
|---|---|---|---|---|---|
| | | 10 min | (1 min) | 1 hr | 1 day |
| 2 | Gemglo Red Ink | 5 | | 0 | 0 |
| 2 | UVLP Vinyl Process Red Ink | 0 | | 0 | 0 |
| 18 | Gemglo Red Ink | 3 | - | 0 | 0 |
| 18 | UVLP Vinyl Process Red Ink | - | 3 | 0 | 0 |
| 19 | Gemglo Red Ink | 10 | - | 3 | 0 |
| 19 | UVLP Vinyl Process Red Ink | - | 3 | 0 | 0 |

TABLE 3

| Examples | 20 | 21 | 22 | 23 | 24 | 25 | 26 | 27 | 28 |
|---|---|---|---|---|---|---|---|---|---|
| % TiO$_2$ | 0 | 2 | 4 | 6 | 8 | 12 | 14 | 16 | 18 |
| % Polypropylene | 50 | 49 | 48 | 47 | 46 | 44 | 43 | 42 | 41 |
| % CaCO$_3$ | 50 | 49 | 48 | 47 | 46 | 44 | 43 | 42 | 41 |
| Bearer Force (Kg) | 90 | 77 | 82 | 77 | 86 | 82 | 82 | 77 | 77 |
| % Labels on Liner | 100 | 100 | 100 | 100 | 100 | 100 | 100 | 100 | 100 |
| Tensile Kilo Pascals | 14,800 | 16,750 | 18,450 | 17,100 | 16,500 | 13,800 | 14,400 | 14,150 | 13,800 |
| % Elong. at break | 600 | 650 | 735 | 725 | 700 | 630 | 605 | 595 | 585 |

Again, as can be seen from the above labels with filled polypropylene facestocks of the invention showed satisfactory to very good linear conditions after die-cutting, with 100% of the labels on the liner.

TABLE 4

| Die-cuttability properties of polypropylene film made with a 9.0 melt index polypropylene homopolymer blended with polyethylene/polypropylene copolymers. | | | |
|---|---|---|---|
| Examples | 29 | 29C** | 30 |
| Copolymer Type | DYPRO 9670 PP/PE MI-4 | None | DYPRO W756 PP/PE MI-7 |
| Copolymer PP/PE | 25 | 0 | 25 |
| Homopolymer PP *MI = 9 | 25 | 50 | 25 |
| % CaCO$_3$ | 50 | 50 | 50 |
| % TiO$_2$ | 0 | 0 | 0 |
| Bearer Force (Kg) | 77 | 68 | 64 |
| % Labels on Liner | 100 | 100 | 100 |
| Liner Condition | A | A | A |

* ASTM-D-1238 Condition L

** Control -- 100% polypropylene homopolymer

TABLE 5

| Die-cuttability properties of polypropylene film made with a 9.0 melt index polypropylene homopolymer blended with polyethylene/vinylacetate copolymers | | | | |
|---|---|---|---|---|
| Examples | 31 | 31C** | 32 | 33 |
| Copolymer Type | NORCHEM PE-3043 4.5% V.A. | None | NORCHEM PE-3010 9.0% V.A. | ELVAX 40W 40% V.A. |
| Copolymer PE/VA | 12 | 0 | 12 | 12 |
| PP Homopolymer *MI = 9 | 38 | 50 | 38 | 38 |
| % CaCO$_3$ | 50 | 50 | 50 | 50 |
| % TiO$_2$ | 0 | 0 | 0 | 0 |
| Bearer Force (Kg) | 77 | 68 | 64 | 64 |
| % Labels on Liner | 100 | 100 | 100 | 100 |
| Liner Condition | A | A | A | A |

* ASTM-D-1238 Condition L

** Control - 100% polypropylene homopolymer, an alternate lablestock of the invention

Again, as can be seen from the above labels with filled polypropylene facestocks of the invention showed very good liner conditions after die-cutting, with 100% of the labels on the liner.

TABLE 6

| Die-cuttability properties of polypropylene film made with a 9.0 melt index polypropylene homopolymer blended with a polyethylene homopolymer. | |
|---|---|
| Example | 34 |
| Polymer Type PG Homopolymer | CHEMPLEX 3404 HOMOPOLYMER PE 12 |
| PP Homopolymer *MI = 9 | 38 |
| % CaCO$_3$ | 50 |
| % TiO$_2$ | 0 |
| Bearer Force (Kg) | 73 |
| % Labels on Liner | 100 |
| Liner Condition | A |

* ASTM-D-1238 Condition L

14

TABLE 7

| Melt Index of Extruded Film Formulated With Polypropylene of Various and Blended Melt Indices | | | | | | |
|---|---|---|---|---|---|---|
| | Composition of Film | | | | | |
| Examples | 35 | 35C | 36 | 37 | 38 | 39 |
| Various Polymer Type | DYPROTM-3275 *MI = 2.0 POLYPROPYLENE HOMOPOLYMER | NONE | DYPROTM-8485 *MI = 1.2 POLYPROPYLENE HOMOPOLYMER | DYPROTM-9670 *MI = 4.0 HIGH PE RANDOM COPOLYMER PP/PE | DYPROTM W-756 *MI = 7.0 HIGH PE RANDOM COPOLYMER PP/PE | DYPROTM-7771 *MI = 8.0 MEDIUM PE RANDOM COPOLYMER PP/PE |
| % | 40 | 0 | 15 | 15 | 15 | 15 |
| % DYPROTM-8771 *Melt Index of 9.0 | 0 | 40 | 25 | 25 | 25 | 25 |
| % CaCO$_3$ | 60 | 60 | 60 | 60 | 60 | 60 |
| Combined *Melt Index | 1.5 | 6.7 | 3.3 | 6.6 | 7.0 | 7.7 |

* ASTM-D-1238 Condition L

EP 0 377 289 A2

<div align="center">

**TABLE 8**

</div>

Die—cuttability properties of polypropylene film made with homopolymer polypropylene polymer (melt index 9.0) showing utility of blending with homopolymer polypropylene polymers with melt indices of 1.2 to 1500

| | Composition of Film | | | | Die—cuttability Properties | | | |
|---|---|---|---|---|---|---|---|---|
| Examples | 40 | 41 | 42 | 43 | 44 | 45 | 46 | 47 |
| Copolymer Type | DYPRO™— 8485 *MI = 1.2 | NONE, ALL *MI = 9.0 | PROFAX™ PD701 *MI = 35 | PROFAX™ PD701 *MI = 35 | GULF PX2253 *MI = 600 | GULF PX2253 *MI = 600 | GULF UH1500 *MI = 1500 | GULF UH1500 *MI = 1500 |
| % | 12 | 0 | 12 | 24 | 12 | 24 | 12 | 24 |
| % Homopoly-mer Poly-propylene *MI = 9 | 38 | 50 | 38 | 26 | 38 | 26 | 38 | 26 |
| % $CaCO_3$ | 50 | 50 | 50 | 50 | 50 | 50 | 50 | 50 |
| % $TiO_2$ | 0 | 0 | 0 | 0 | 0 | 0 | 0 | 0 |
| Bearer Force (Kg) | 68 | 77 | 73 | 68 | 73 | 73 | 68 | 64 |
| % Labels on Liner | 100 | 100 | 100 | 100 | 100 | 100 | 100 | 100 |
| Liner Condition | A | A | A | A | A | A | A | A |

* ASTM—D—1238 Condition L

TABLE 9

| Die-cuttability properties of polypropylene film made with homopolymer polypropylene polymers melt index, 2.0 and 9.0 and blends of same. | | | | | |
|---|---|---|---|---|---|
| Examples | 48 | 49 | 50 | 51 | 52 |
| Polymer Type | Dypro™ 3275 MI = 2.0 | Dypro™ 3275 MI = 2.0 | Dypro™ 3275 MI = 2.0 | Dypro™ 3275 MI = 2.0 | Dypro™ 3275 MI = 2.0 |
| % | 0 | 10 | 20 | 30 | 40 |
| % Homopolymer PP MI = 9.0 | 50 | 40 | 30 | 20 | 10 |
| % CaCo$_3$ | 50 | 50 | 50 | 50 | 50 |
| % TiO$_2$ | 0 | 0 | 0 | 0 | 0 |
| Bearer Force (Kg) | 73 | 82 | 86 | 227 | 227 |
| % Labels on Liner | 100 | 100 | 100 | 90 | 70 |
| Liner Condition | A | A/B | B | B/C | B |

* ASTM-D-1238 Condition L

TABLE 10

| The effect of polypropylene content, filler content and filler types on the die-cuttability properties of polypropylene films for pressure sensitive film label stocks | | | | | | |
|---|---|---|---|---|---|---|
| Examples | 53C | 54C | 55C | 56C | 60 | 61 |
| % Fillers Type * | 10 | 20 | 15 | 40 | 22.5 | 57 |
| % CaCo$_3$ | | | 15 | | 22.5 | |
| % PP | 90 | 80 | 70 | 60 | 50 | 43 |
| % TiO$_2$ | | | | | | |
| Bearer Force (Kg) | 227 | 227 | 227 | 227 | 91 | 64 |
| % Labels on liner | 0 | 25 | 83 | 95 | 100 | 100 |
| Liner Cond. | C | B | A | A | A | A |
| Ink Offset (%) Gemglo (UV) Red | | | | | | |
| p10 min (1 min) | 5 (5) | 10 (13) | 15 (13) | (3) | 10 (10) | |
| 1 hr | 3 (3) | 3 (3) | 3 (5) | (3) | 0 (3) | |
| 1 day | 0 (0) | 0 (3) | 0 (0) | (0) | 0 (0) | |

*Talc, California / Pfizer CP 1040

TABLE 10A

| Examples | 57C | 58C | 59C | 62 | 63 | 64 |
|---|---|---|---|---|---|---|
| % Fillers Type * | 10 | 20 | 15 | 40 | 22.5 | 45 |
| % CaCO$_3$ | | | 15 | | 22.5 | |
| % PP | 90 | 80 | 67 | 60 | 50 | 55 |
| % TiO$_2$ | | | 3 | | 5 | |
| Bearer Force (Kg) | 227 | 227 | 227 | 100 | 73 | 64 |
| % Labels on liner | 22 | 67 | 85 | 100 | 100 | 100 |
| Liner Cond. | B | B | A | C | A | A |
| Gemglo (UV) Red | | | | | | |
| 10 min (1 min) | 5 (10) | 8 (5) | 90 (10) | 50 (10) | 8 (5) | 90 (10) |
| 1 hr | 0 (3) | 0 (0) | 40 (10) | 15 (5) | 0 (0) | 5 (3) |
| 1 day | 0 (0) | 0 (0) | 8 (3) | 0 (0) | 0 (0) | 0 (0) |

*Talc, Montana / Pfizer MP 1052

TABLE 11

| The effect of polypropylene content, filler content and filler types on the die-cuttability properties of polypropylene films for pressure sensitive film label stocks. | | | | | | |
|---|---|---|---|---|---|---|
| Examples | 65C | 66C | 67C | 68C | 69 | 70 |
| % Fillers Type * | 10 | 20 | 15 | 40 | 22.5 | 57 |
| % CaCO$_3$ | | | 15 | | 22.5 | |
| % PP | 90 | 80 | 67 | 60 | 50 | 43 |
| % TiO$_2$ | | | 3 | | 5 | |
| Bearer Force (Kg) | 227 | 227 | 227 | 173 | 73 | 68 |
| % Labels on liner | 17 | 53 | 83 | 100 | 100 | 100 |
| Liner Cond. | C | A/B | C | C | B | A |
| Ink Offset (%) | | | | | | |
| Gemglo (UV) Red | | | | | | |
| 10 min (1 min) | 8 (10) | 13 (10) | 10 (15) | 80 (10) | 8 (3) | 45 (0) |
| 1 hr | 3 (5) | 3 (5) | 0 (3) | 5 (0) | 0 (3) | 3 (0) |
| 1 day | 0 (0) | 0 (0) | 0 (0) | 0 (0) | 0 (0) | 3 (0) |

* clay, calcined / Huber Polyfill WC

TABLE 12

| The effect of polypropylene content, filler content and filler types on the die-cuttability properties of polypropylene films for pressure sensitive film label stocks. | | | | |
|---|---|---|---|---|
| Examples | 71C | 72C | 73C | 76 |
| % Fillers Type * | 10 | 20 | 15 | 26 |
| % CaCO$_3$ | | | 15 | |
| % PP | 90 | 80 | 67 | 74 |
| % TiO$_2$ | | | 3 | |
| Bearer Force (Kg) | 227 | 227 | 227 | 73 |
| % Labels on liner | 22 | 63 | 95 | 100 |
| Liner Cond. | A | A | A | B |
| Ink Offset (%) | | | | |
| Gemglo (UV) Red | | | | |
| 10 min (1 min) | 30 (13) | 75 (45) | 80 (13) | 90 (43) |
| 1 hr | 5 (18) | 10 (20) | 43 (8) | 30 (18) |
| 1 day | 0 (3) | 5 (15) | 18 (3) | 23 (0) |

\* Mica Huber Aspraflex 100

TABLE 12A

| Examples | 72C | 73C | 74C | 76 |
|---|---|---|---|---|
| % Fillers Type ** | 10 | 20 | 15 | 32 |
| % CaCO$_3$ | | | 15 | |
| % PP | 90 | 80 | 67 | 68 |
| % TiO$_2$ | | | 3 | |
| Bearer Force (Kg) | 227 | 227 | 227 | 64 |
| % Labels on liner | 11 | 20 | 68 | 100 |
| Liner Cond. | A | A | A | A |
| Ink Offset (%) | | | | |
| Gemglo (UV) Red | | | | |
| 10 min (1 min) | 20 (18) | 10 (5) | 13 (13) | 55 (20) |
| 1 hr | 0 (10) | 3 (3) | 0 (0) | 10 (10) |
| 1 day | 0 (0) | 0 (0) | 0 (0) | 0 (8) |

\** Mica Huber Asprapearl 100

TABLE 13

| The effect of polypropylene content, filler content and filler types on the die-cuttability properties of polypropylene films for pressure sensitive film label stocks. | | | | | | |
|---|---|---|---|---|---|---|
| Examples | 79C | 80C | 81C | 82C | 83C | 93 |
| % Fillers Type * | 10 | 20 | 15 | 40 | 22.5 | 55 |
| % CaCO₃ | | | 15 | | 22.5 | |
| % PP | 90 | 80 | 67 | 60 | 50 | 45 |
| % TiO₂ | | | 3 | | 5 | |
| Bearer Force (Kg) | 227 | 227 | 227 | 227 | 109 | 68 |
| % Labels on liner | 5 | 8 | 75 | 58 | 98 | 100 |
| Liner Cond. | A | A | A | A | A | A |
| Ink Offset (%) | | | | | | |
| Gemglo (UV) Red | | | | | | |
| 10 min (1 min) | | | | | 3 (3) | |
| 1 hr | | | | | 0 (0) | |
| 1 day | | | | | 0 (0) | |

\* Soft Silica Tammsco Neosil A

TABLE 13A

| Examples | 84C | 85C | 86C | 87C | 88C | 94 |
|---|---|---|---|---|---|---|
| % Fillers Type ** | 10 | 20 | 15 | 40 | 22.5 | 57 |
| % CaCO₃ | | | 15 | | 22.5 | |
| % PP | 90 | 80 | 67 | 60 | 50 | 43 |
| % TiO₂ | | | 3 | | 5 | |
| Bearer Force (Kg) | 227 | 227 | 227 | 227 | 227 | 59 |
| % Labels on liner | 3 | 22 | 50 | 95 | 95 | 100 |
| Liner Cond. | B/C | B/C | B | B | A | A |
| Ink Offset (%) | | | | | | |
| Gemglo (UV) Red | | | | | | |
| 10 min (1 min) | | | | | 10 (5) | 90 (0) |
| 1 hr | | | | | 0 (3) | 10 (0) |
| 1 day | | | | | 0 (0) | 0 (0) |

\* Soft Silica Tammsco S Micron

TABLE 14

| Examples | 89C | 90C | 91C | 92C | 95 |
|---|---|---|---|---|---|
| % Fillers Type * | 10 | 20 | 15 | 40 | 61 |
| % CaCO₃ | | | 15 | | |
| % PP | 90 | 80 | 67 | 60 | 39 |
| % TiO₂ | | | 3 | | |
| Bearer Force (Kg) | 227 | 227 | 227 | 227 | 59 |
| % Labels on liner | 2 | 40 | 67 | 95 | 100 |
| Liner Cond. | C | C | C | B/C | B |
| Ink Offset (%) | | | | | |
| Gemglo (UV) Red | | | | | |
| 10 min (1 min) | | | | 3 (8) | 3 (13) |
| 1 hr | | | | 0 (0) | 3 (3) |
| 1 day | | | | 0 (0) | 0 (0) |

TABLE 14A

| Examples | 96C | 97C | 98C | 99C | 100 | 101 |
|---|---|---|---|---|---|---|
| % Fillers Type * | 10 | 20 | 15 | 40 | 22.5 | 65 |
| % CaCO₃ | | | 15 | | 22.5 | |
| % PP | 90 | 80 | 67 | 60 | 50 | 35 |
| % TiO₂ | | | 3 | | 5 | |
| Bearer Force (Kg) | 227 | 227 | 227 | 227 | 1A | |
| % Labels on liner | 11 | 11 | 50 | 61 | 100 | |
| Liner Cond. | A | A | A | A | B | |
| Ink Offset (%) | | | | | | |
| Gemglo (UV) Red | | | | | | |
| 10 min (1 min) | | | | 50 (8) | 8 (3) | |
| 1 hr | | | | 3 (3) | 3 (3) | |
| 1 day | | | | 0 (3) | 0 (0) | |

* Barium Sulphate Bartex 65

TABLE 15

| Examples | 102C | 103C | 104C | 105C | 106C | 107C |
|---|---|---|---|---|---|---|
| % Fillers Type * | 10 | 20 | 15 | 40 | 22.5 | 54 |
| % CaCO$_3$ | | | 15 | | 22.5 | |
| % PP | 90 | 80 | 67 | 60 | 50 | 46 |
| % TiO$_2$ | | | 3 | | 5 | |
| Bearer Force (Kg) | 227 | 227 | 227 | 227 | 227 | 227 |
| % Labels on liner | 0 | 0 | 30 | 39 | 87 | 80 |
| Liner Cond. | A | A/B | A | A | A | B |
| Ink Offset (%) Gemglo (UV) Red | | | | | | |
| 10 min (1 min) | | | | | 13 (3) | 30 (5) |
| 1 hr | | | | | 0 (0) | 3 (0) |
| 1 day | | | | | 0 (0) | 0 (0) |

* Aluminum Silicate Degussa P820

TABLE 16

| Examples | 108C | 109C | 110C | 111C | 112C | 113C | 114C |
|---|---|---|---|---|---|---|---|
| % Fillers Type * | 0 | 0 | 1.5 | 1.5 | 1.5 | 2 | 10 |
| % CaCO$_3$ | 36 | 36 | 30 | 36 | 42 | 36 | |
| % PP | 56 | 64 | 69 | 62.5 | 56.5 | 54 | 90 |
| % TiO$_2$ | 8 | | | | | 8 | |
| Bearer Force (Kg) | 227 | 227 | 227 | 227 | 227 | 227 | 227 |
| % Labels on liner | 75 | 70 | 60 | 75 | 80 | 85 | 22 |
| Liner Cond. | A | B | C | B | B | B | A |
| Ink Offset (%) Gemglo (UV) Red | | | | | | | |
| 10 min (1 min) | | | | | 3 (3) | 3 (5) | |
| 1 hr | | | | | 0 (0) | 0 (0) | |
| 1 day | | | | | 0 (0) | 0 (0) | |

* Silica Degussa FK 500LS

TABLE 17

| The effect of polypropylene content, filler content and filler types on the die-cuttability of polypropylene films for pressure sensitive film label stocks. | | | | | | |
|---|---|---|---|---|---|---|
| Examples | 115C | 116C | 117C | 118C | 119C | 120 |
| % Fillers Type * | 10 | 20 | 15 | 40 | 62 | 22.5 |
| % CaCO$_3$ | | | 15 | | | 22.5 |
| % PP | 90 | 80 | 67 | 60 | 38 | 50 |
| % TiO$_2$ | | | 3 | | | 5 |
| Bearer Force (Kg) | 227 | 227 | 227 | 227 | 155 | 100 |
| % Labels on liner | 53 | 64 | 92 | 100 | 80 | 100 |
| Liner Cond. | A | B | B | B | B | A |
| Ink Offset (%) Gemglo (UV) Red | | | | | | |
| 10 min (1 min) | | | | | 3 (3) | 5 (5) |
| 1 hr | | | | | 0 (0) | 0 (0) |
| 1 day | | | | | 0 (0) | 0 (0) |

\* Alumina Arco Ceralox MPA-4

TABLE 18

| The effect of polypropylene content, filler content and filler types on the die-cuttability of polypropylene films for pressure sensitive films label stocks. | | | | | | |
|---|---|---|---|---|---|---|
| Examples | 121C | 122C | 123C | 124C | 125C | 126 |
| % Fillers Type * | 10 | 20 | 15 | 40 | 57 | 22.5 |
| % CaCO$_3$ | | | 15 | | | 22.5 |
| % PP | 90 | 80 | 67 | 60 | 43 | 50 |
| % TiO$_2$ | | | 3 | | | 5 |
| Bearer Force (Kg) | 227 | 227 | 227 | 227 | 227 | 73 |
| % Labels on liner | 25 | 30 | 85 | 65 | 90 | 100 |
| Liner Cond. | A | B | B | A | A | A |
| Ink Offset (%) Gemplo (UV) Red | | | | | | |
| 10 min (1 min) | | | | | 13 (0) | 5 (3) |
| 1 hr | | | | | 3 (5) | 0 (0) |
| 1 day | | | | | 3 (0) | 9 (0) |

\* Zinc Oxide New Jersey Zinc xx-78

TABLE 19

| Film thickness effects on die-cuttability | | | | | | | |
|---|---|---|---|---|---|---|---|
| Examples | 127 | 128 | 129 | 130 | 131 | 132 | 133 |
| Film Thickness (mils) | 8.0 | 6.0 | 4.0 | 3.5 | 3.0 | 2.5 | 2.0 or less |
| Bearer Force (Kg) | 68 | 64 | 64 | 64 | 73 | 73 | 82 |
| % Labels on liner | *100 | 100 | 100 | 100 | 100 | 100 | **100 |
| Liner Cond. | A | A | A | A | A | A | A |

* Requires tighter liner release than typical.
** Requires smoother liners than typical.

## Claims

1. A cast-extruded film suitable for controlled-depth die-cuttable label face-stock comprising:
a) from 70 parts to 30 parts of a polypropylene polymer selected from the group consisting of polypropylene homopolymer and a blend of polypropylene and at least one other olefinic polymer, and
b) correspondingly, from 30 parts to 70 parts of an inorganic filler,
wherein said film is controlled depth die-cuttable with a bearer force of not more than 120 kilograms, and has tensile and elongation at break values of not more than 20,000 kilopascals and 750% respectively.

2. A cast-extruded film suitable for controlled-depth die-cuttable label face-stock according to claim 1 wherein said polypropylene polymer is a blend of polypropylene homopolymer and an olefinic polymer selected from the group consisting of poly(propylene-ethylene) copolymers polyethylene homopolymers, and polyethylene-vinyl acetate copolymers.

3. A cast-extruded film suitable for controlled-depth die-cuttable label face-stock according to claim 2 wherein said polypropylene homopolymer comprises from 50% to 100% of said blend.

4. A cast-extruded film suitable for controlled-depth die-cuttable label face-stock according to claim 1 wherein said inorganic filler is selected from the group consisting of calcium carbonate, metal oxides, metal hydroxides, mica, talc, bentonite, magnesium silicone dioxide, silicates, montmorillonite, barium sulfate and mixtures thereof, said inorganic filler having a particle size of from 0.4 micrometer to 50 micrometers.

5. A cast-extruded film suitable for controlled-depth die-cuttable label face-stock according to claim 1 wherein said inorganic filler comprises at least about 40% calcium carbonate.

6. A controlled-depth die-cut label comprising a facestock according to claim 1.

7. A controlled-depth die-cut label according to claim 6 wherein the facestock is from about 50 micrometers to about 250 micrometers thick.

8. A controlled-depth die-cut label according to claim 6 further comprising a topcoat, said topcoat comprising a polyethylmethacrylate resin, said label being printable.

9. A controlled-depth die-cut label according to claim 11 having at least a potion thereof coated with a pressure-sensitive adhesive.

10. A release-liner comprising the film of claim 1, at least a portion of said film being coated with a release agent.

*12*

*13*

*11*

*14*

*13*

*12*

*22*

*22*

*21*

*23*

*Fig. 1*

*Fig. 3*

*11*

*14*

*35*

*33*

*34*

*31*

*37*

*21*

*23*

*Fig. 4*

*11*

*14*

*35*

*33*

*34*

*31*

*37*

*21*

*23*

Fig. 2